# EUROPEAN PATENT SPECIFICATION

(11) **EP 3 437 041 B1**
(45) Date of publication and mention of the grant of the patent: **18.09.2024**
(21) Application number: 17715593.4
(22) Date of filing: 22.03.2017
(51) Int. Cl.: G06Q 10/08

(54) **VIRTUAL CARGO MIXING MANAGER**
MANAGER FÜR VIRTUELLE FRACHTMISCHUNG
GESTIONNAIRE VIRTUEL DE CARGAISON MIXTE

(30) Priority: 28.03.2016 US 201662314157 P
(43) Date of publication of application: 06.02.2019
(73) Proprietor: Carrier Corporation, Farmington, CT 06032 (US)
(72) Inventor: CRONIN, John, Williston, Vermont 05495 (US); BODKIN, Joseph George, Williston, Vermont 05495 (US); GOGUEN, Jonathan T., Williston, Vermont 05495 (US)
(74) Representative: Dehns
(86) International application number: PCT/US2017/023593
(87) International publication number: WO 2017/172445

(56) References cited:
- US-A1- 2003 233 189
- US-A1- 2012 232 942
- US-A1- 2015 130 592
- ANDREAS BORTFELDT ET AL: "WORKING PAPER SERIES Container Loading Problems - A State-of-the-Art Review", 16 August 2013 (2013-08-16), XP055368076, Retrieved from the Internet <URL:http://www.fww.ovgu.de/fww_media/femm/femm_2012/2012_07-EGOTEC-nolghv0qs11vks0lm705r64m0qukn0mp.pdf> [retrieved on 20170427]

## Description

The embodiments disclosed herein generally relate to cold chain distribution systems, more specifically to a method and system for monitoring the compatibility of cargo within a transport container.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

Certain perishable goods may not be able to be stored within the same cargo space due to a variety of contamination concerns. Improved systems and particularly improved compatibility monitoring systems would provide cost benefits and reduce the chances contamination with incompatible perishable goods.

US 2015/130592 A1 discloses a package-loading system that determines a target position for a package by using information from a data tag.

Andreas Bortfeldt at al.,"WORKING PAPER SERIES Container Loading Problems - A State-of-the-Art Review" discusses types of container loading problems and possible constraint categories.

According to a first aspect of the invention, there is provided a as defined by claim 1.

According to a second aspect of the invention, there is provided a system as defined by claim 4.

According to a third aspect of the invention, there is provided a computer program product tangibly embodied on a computer readable medium as defined by claim 7.

Technical effects of embodiments include the ability to the monitor compatibility of cargo within a transport container.

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 illustrates a schematic view of a system for monitoring compatibility of cargo within a transport container, according to an embodiment of the present disclosure; and
FIG. 2 illustrates a schematic view a cold chain distribution system that may incorporate embodiments of the present disclosure;
FIG. 3 illustrates a schematic view of a tag scanner base software architecture, according to an embodiment of the present disclosure; and
FIG. 4 illustrates a schematic view of a verification base software architecture, according to an embodiment of the present disclosure.

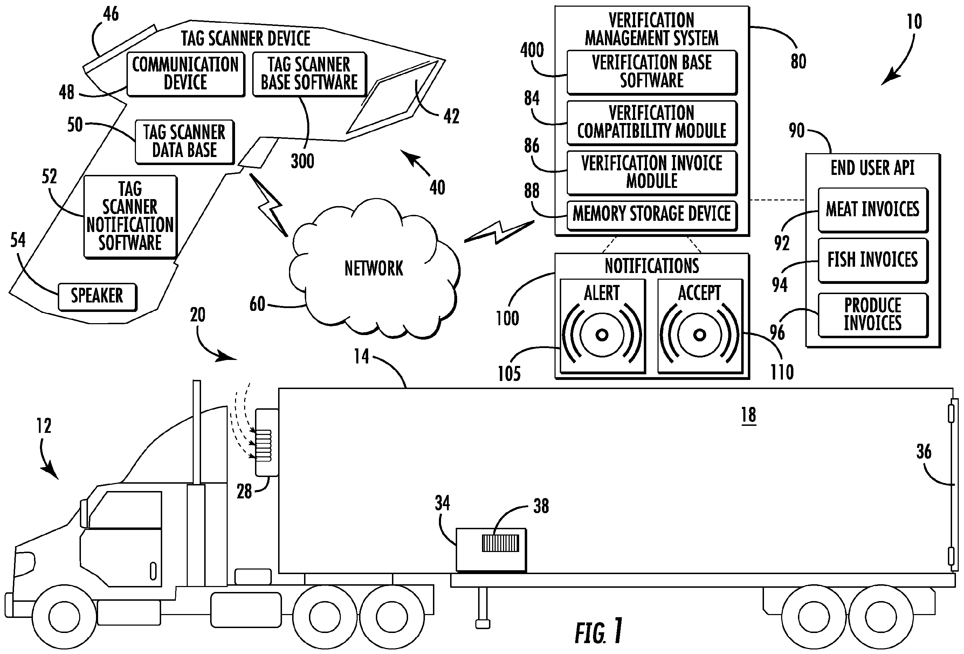

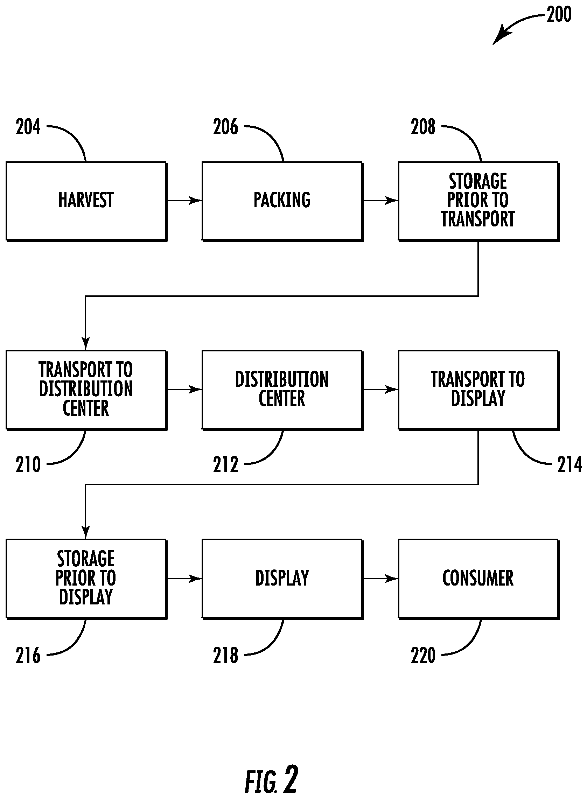

Referring now to the drawings, FIG. 1 illustrates a schematic view of a system 10 for monitoring compatibility of cargo (e.g. perishable goods 34) within a transport container 14, according to an embodiment of the present disclosure. FIG. 2 illustrates a schematic view a cold chain distribution system 200 that may incorporate embodiments of the present disclosure. Typically, transport refrigeration systems 20 are used to transport and distribute perishable goods and environmentally sensitive goods (herein referred to as perishable goods 34) in various stages of a cold chain distribution system 200. As illustrated in FIG. 2, the cold chain distribution system 200 may include harvest 204, packing 206, storage prior to transport 208, transport to distribution center 210, distribution center 212, transport to display 214, storage prior to display 216, display 218 and consumer 220. These stages are provided for illustrative purposes and a distribution chain may include fewer stages or additional stages, such as, for example a cleaning stage, a processing stage, and additional transportation stages. In the illustrated embodiment, the cargo in the transport container 14 is perishable goods 34, however it is understood that embodiments described herein may be applied to other types of cargo that are not perishable or environmentally sensitive.

In the illustrated embodiment, a transport refrigeration system 20 includes a refrigerated transport container 14, a transport refrigeration unit 28, a door 36 and perishable goods 34 with associated tags 38. The transport container 14 may be pulled by a tractor 12. It is understood that embodiments described herein may be applied to shipping containers that are shipped by rail, sea, or any other suitable container, without use of a tractor 12. The transport container 14 may define an interior compartment 18.

In the illustrated embodiment, the transport refrigeration unit 28 is associated with the transport container 14 to provide desired environmental parameters, such as, for example temperature, pressure, humidity, carbon dioxide, ethylene, ozone, light exposure, vibration exposure, and other conditions to the interior compartment 18. In further embodiments, the transport refrigeration unit 28 is a refrigeration system capable of providing a desired temperature and humidity range. The perishable goods 34 may include but are not limited to fruits, vegetables, grains, beans, nuts, eggs, dairy, seed, flowers, meat, poultry, fish, ice, blood, pharmaceuticals, or any other suitable cargo requiring cold chain transport. In the illustrated embodiment the perishable goods 34 have a tag 38 located on the perishable goods. The tag 38 is a source of identification for the perishable goods 34, such as, for example a bar code or radio frequency identification (RFID). The tag may contain identification data such as, for example the type of perishable goods 34, the origin, the date of harvest 204, the original shipping date, the original delivery date, the expiration date and the type of container.

In the illustrated embodiment, the system 10 further includes a tag scanner device 40. The tag scanner device 40 may be a hand held scanner as seen in FIG. 1. In alternate embodiments, the tag scanner device 40 may be an automatic scanning device to scan perishable goods 34 within the transport container 14 or as they move through the container door 36. For instance, the tag scanning device may be an RFID reader embedded into the transport container 14 at the door 36 that scans the RFID tag 38 as they move through the door 36. As shown in the illustrated embodiment, the tag scanner 40 may include tag scanner database software 300, a tag scanner reader 42, a tag scanner database 50, a communication device 48, a tag scanner notification software 52, a display 46, and a speaker 54. The tag scanner database software 300 may be responsible for running the operations of the tag scanner device 40 and is described in further detail below. The tag scanner reader 42 reads the identification data on the tag 38. The tag scanner database 50 is a memory storage device that stores the data read from the tag 38. The tag scanner database 50 may be a memory storage device such as, for example, a random access memory (RAM), read only memory (ROM), or other electronic, optical, magnetic or any other computer readable medium.

The communication device 48 may transmit data via a wireless transmission method from the tag scanner database 50 to the network 60. The wireless transmission method may be, but is not limited to, radio, microwave, cellular, satellite, or another wireless communication method. The network 60 may be but is not limited to satellite networks, cellular networks, cloud computing network, wide area network, or another type of wireless network. The communication device 48 may also include a short range interface, wherein the short range interface includes at least one of: a wired interface, an optical interface, and a short range wireless interface. The communication device 48 may also receive data and/or notifications 100, including but not limited to alert 105 notifications and accept 110 notifications from the network 60. The tag scanner nonfiction software 52 may be responsible for managing the notifications 100 received from the network 60. The tag scanner notification software 52 may convey the notification 100 to an operator using the tag scanner device 40 via a visual notification 100 on the display 46 and/or an audible notification 100 via the speaker 54. The notification 100 may include data associated with and explaining the notification 100. The tag scanner device 40 may also include a processor (not shown) such as, for example a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously.

As shown in the illustrated embodiment, a verification management system 80 is also connected to the network 60. The connection may be via a wireless method include but not limited to, radio, microwave, cellular, satellite, or another wireless communication method. The verification management system 80 may include verification base software 400, a verification compatibility module 84, a verification invoice module 86, a memory storage device 88 and an end user application programming interface (API) 90. The verification base software 400 may be responsible for analyzing perishable good 34 data sent from the tag scanner database 50 via the network 60 to the determine compatibility. The verification base software 400 may compare the data from the tag scanner database 50 to information stored within the verification compatibility module 84, the verification invoice module 86, and/or the end user API 90. The verification base software 400 is described in further detail below. The verification compatibility module 84 determines perishable good 34 compatibility information. In other words, the verification compatibility module 84 determines which perishable goods 34 should and/or should not be stored within the same transport container 14. For example, tomatoes release ethylene, and subsequently cannot be transported within the same transport container 14 as bananas because doing so may cause the bananas to over ripen. Storing bananas with tomatoes would be considered contamination in this scenario because the two are incompatible.

The verification invoice module 86 compares data from the perishable goods 34 entering the transport container 14 to data regarding future perishable goods that may be picked up and stored within the transport container 14 along cold chain distribution system 200, and/or data regarding past perishable goods that are already contained within the transport container 14. The verification invoice module 86 is compiled from end user API 90 that is connected to the verification management system 80. The end user API 90 includes information comprising meat invoices 92, fish invoices 94, and produce invoices 96. Advantageously this may help address compatibility issue of perishable goods 34 before they occur and may also help the driver of the tracker 12 adjust the travel route accordingly to avoid compatibility issues and possible contamination. The verification management system 80 may include at least one memory storage device 88 such as, for example, a random access memory (RAM), read only memory (ROM), or other electronic, optical, magnetic or any other computer readable medium. The verification compatibility module 84 and the verification invoice module 86 may include their own memory storage device and/or may utilize the memory storage device 88 for the verification management system 80. The verification management system 80 may also include a processor (not shown) such as, for example a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously.

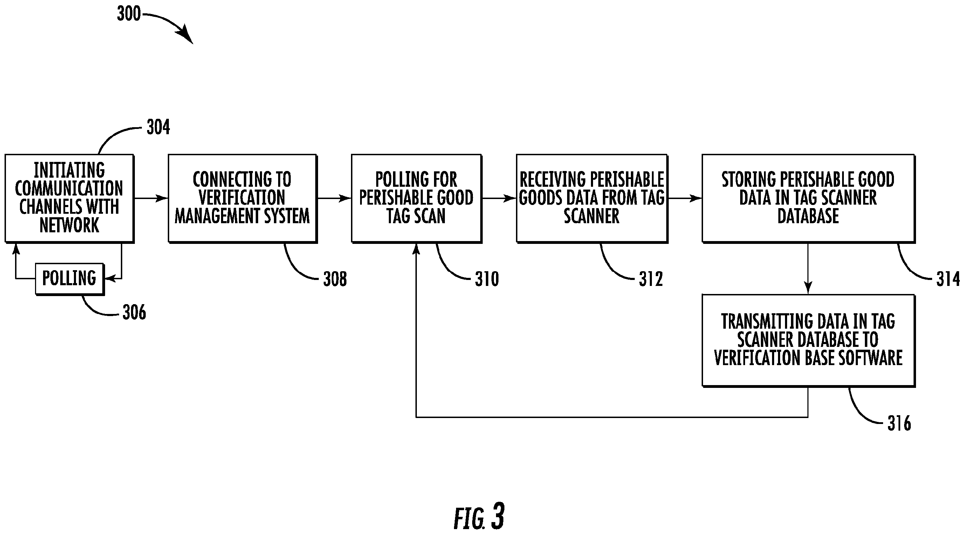

Referring now also to FIG. 3, which shows a schematic view of a tag scanner base software 300 architecture, according to an embodiment of the present disclosure. As mentioned above, the tag scanner base software 300 may be located within the tag scanner device 40. The tag scanner base software 300 begins with initiating communication channels with the network 60 at block 304 and is continuously polling at block 306 until a connection is made with the verification management system 80 at block 308. Next, the tag scanner base software 300 is polling until a tag 38 is read (scanned) by the tag scanner device 40. Once the tag 38 of a perishable good 34 is read by the tag scanner device 40, the tag scanner base software 300 receives the data that was read at block 312 and stores the data in the tag scanner database 50 at block 314. The data in the tag scanner database 50 is then transmitted to the verification base software 400 at block 316. Once the data has been transmitted, the tag scanner software 300 returns to polling at block 310 until the next tag 38 is scanned.

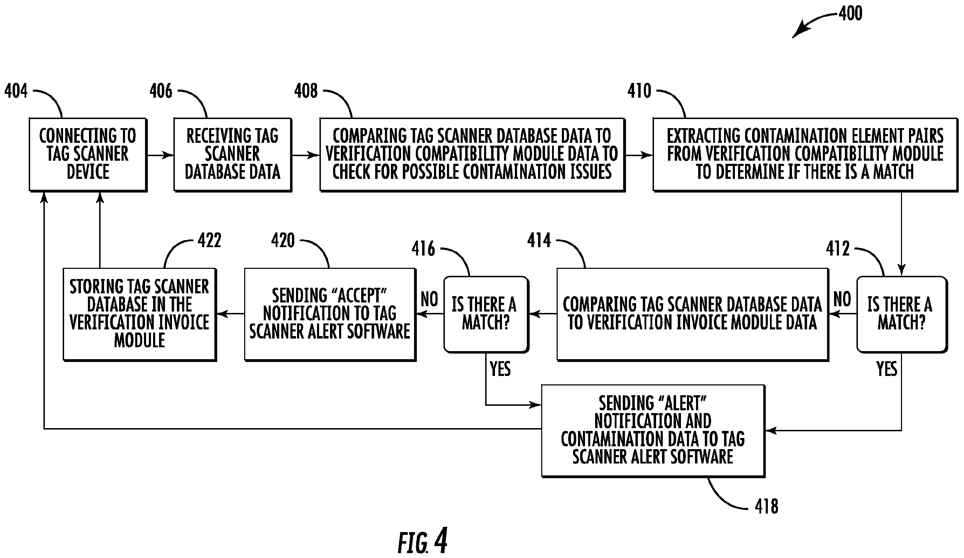

Referring now also to FIG. 4, which shows a schematic view of a verification base software 400 architecture, according to an embodiment of the present disclosure. First the verification base software 400 connects to the tag scanner device 40 at block 404 and then receives the tag scanner database 50 data at block 406. Next, the data from the tag scanner database 50 is compared to the verification compatibility database 84 data to check for possible contamination issues at block 408. The verification base software 400 then extracts contamination element pairs (e.g. tomatoes and bananas) generated by the verification compatibility module 84 to determine if there is a match at block 410. At block 412, if there is a match, then the verification base software 400 sends an alert 105 notification 100, and optionally the data associated with the alert, to the tag scanner notification software 52 at block 418. If there is not a match at block 412, then the verification base software 400 compares the tag scanner database 50 data to the verification invoice module 86 data at block 414. Then at block 416, if there is a match between the tag scanner database 50 data and the verification invoice module 86 data then the verification base software 400 sends an alert 105 notification 100, and optionally the contamination data, to the tag scanner notification software 52 at block 418. If there is not a match at block 416 between the tag scanner database 50 data and the verification invoice module 86 data then the verification base software 400 sends an accept 110 notification 100 to the tag scanner notification software 52 at block 420. Finally, at block 422 the verification base software 400 stores the tag scanner database 50 data in the verification invoice module 86.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Accordingly, the invention is not to be seen as limited by the foregoing description, but is only limited by the scope of the appended claims.

## Claims

1. A method of monitoring compatibility to avoid contamination of cargo (34) within a transport container (14), the method comprising:
reading, using a scanner device (40), data tags (38) associated with cargo entering the transport container; and
storing, using a memory storage device (50), data from the data tags; and **characterised by**
analyzing, using a verification management system (80), the compatibility of the cargo in response to the data, the verification management system coupled to the memory storage device, the verification management system including:
a verification compatibility module (84) to determine possible contamination element pairs in response to the data, wherein the verification compatibility module determines if cargo entering the transport container is compatible in response to the possible contamination element pairs; and
a verification invoice module (86) to determine if at least one of past cargo and future cargo is compatible with cargo entering the transport container in response to the possible contamination element pairs, wherein the verification invoice module is compiled from an end user API (90) including information comprising meat invoices (92), fish invoices (94) and produce invoices (96); and
transmitting an alert (105) notification to the scanner device, using the verification management system (80), when it is determined that cargo (34) entering the transport container (14) should not be stored within the transport container as it is not compatible with at least one of past cargo and future cargo.

2. The method of claim 1, further comprising:
activating an accept (110) notification, using the verification management system (80), when past cargo, future cargo, and cargo (34) entering the transport container (14) are compatible.

3. The method of claim 2, further comprising: transmitting the accept (110) notification to the scanner device (40).

4. A system (10) for monitoring compatibility to avoid contamination of cargo (34) within a transport container (14), the system comprising:
a scanner device (40) configured to read data tags (38) associated with cargo entering the transport container; and
a memory storage device (50) configured to store data from the data tags; and **characterised by**
a verification management system (80) configured to analyze the compatibility of the cargo in response to the data, the verification management system coupled to the memory storage device, the verification management system including:
a verification compatibility module (84) configured to determine possible contamination element pairs in response to the data, wherein the verification compatibility module is configured to determine if cargo entering the transport container is compatible in response to the possible contamination element pairs; and
a verification invoice module (86) configured to determine if at least one of past cargo and future cargo is compatible with cargo entering the transport container in response to the possible contamination element pairs, wherein the verification invoice module is compiled from an end user API (90) including information comprising meat invoices (92), fish invoices (94) and produce invoices (96);
wherein the verification management system (80) is configured to transmit an alert (105) notification to the scanner device when it is determined that cargo (34) entering the transport container (14) should not be stored within the transport container as it is not compatible with at least one of past cargo and future cargo.

5. The system of claim 4, wherein:
the verification management system (80) is configured to activate an accept (110) notification when past cargo, future cargo, and cargo (34) entering the transport container (14) are compatible.

6. The system of claim 5, wherein: the verification management system (80) is configured to transmit the accept (110) notification to the scanner device (40).

7. A computer program product tangibly embodied on a computer readable medium, the computer program product including instructions that, when executed by a processor, cause the processor to perform operations comprising:
reading, using a scanner device (40), data tags (38) associated with cargo entering a transport container (14); and
storing, using a memory storage device (50), data from the data tags; and **characterised by**
analyzing, using a verification management system (80), the compatibility of the cargo in response to the data, the verification management system coupled to the memory storage device, the verification management system including:
a verification compatibility module (84) to determine possible contamination element pairs in response to the data, wherein the verification compatibility module determines if cargo entering the transport container is compatible in response to the possible contamination element pairs; and
a verification invoice module (86) to determine if at least one of past cargo and future cargo is compatible with cargo entering the transport container in response to the possible contamination element pairs, wherein the verification invoice module is compiled from an end user API (90) including information comprising meat invoices (92), fish invoices (94) and produce invoices (96); and
transmitting an alert (105) notification to the scanner device, using the verification management system (80), when it is determined that cargo (34) entering the transport container (14) should not be stored within the transport container as it is not compatible with at least one of past cargo and future cargo.

8. The computer program of claim 7, wherein the operations further comprise:
activating an accept (110) notification, using the verification management system (80), when past cargo, future cargo, and cargo (34) entering the transport container (14) are compatible.

9. The computer program of claim 8, wherein the operations further comprise:
transmitting the accept (110) notification to the scanner device (40).

## Patentansprüche

1. Verfahren zum Überwachen der Kompatibilität zum Vermeiden von Kontamination einer Fracht (34) innerhalb eines Transportcontainers (14), wobei das Verfahren Folgendes umfasst:
Lesen von Datenetiketten (38), die einer in den Transportcontainer eingebrachten Fracht zugeordnet sind, unter Verwendung einer Scannervorrichtung (40); und
Speichern von Daten von den Datenetiketten unter Verwendung einer Speichervorrichtung (50); und **gekennzeichnet durch** Analysieren der Kompatibilität der Fracht unter Verwendung eines Verifizierungsmanagementsystems (80) als Reaktion auf die Daten, wobei das Verifizierungsmanagementsystem an die Speichervorrichtung gekoppelt ist, wobei das Verifizierungsmanagementsystem Folgendes beinhaltet:
ein Verifizierungskompatibilitätsmodul (84) zum Bestimmen möglicher Kontaminationselementpaare als Reaktion auf die Daten, wobei das Verifizierungskompatibilitätsmodul als Reaktion auf die möglichen Kontaminationselementpaare bestimmt, ob die in den Transportcontainer eingebrachte Fracht kompatibel ist; und
ein Verifizierungsrechnungsmodul (86) zum Bestimmen als Reaktion auf mögliche Kontaminationselementpaare, ob mindestens eine von vorherige Fracht und künftiger Fracht mit in den Transportcontainer eingebrachter Fracht kompatibel ist, wobei das Verifizierungsrechnungsmodul von einer Endbenutzer-API (90) kompiliert ist, die Informationen umfassend Fleischrechnungen (92), Fischrechnungen (94) und Rechnungen für landwirtschaftliche Erzeugnisse(96) beinhaltet;und Übertragen einer Benachrichtigung mit Warnung (105) an die Scannervorrichtung unter Verwendung des Verifizierungsmanagementsystems (80), wenn bestimmt ist, dass in den Transportcontainer (14) eingebrachte Fracht (34) nicht in dem Transportcontainer gelagert werden sollte, da sie nicht mit mindestens einer von vorherige Fracht und künftiger Fracht kompatibel ist.

2. Verfahren nach Anspruch 1, ferner umfassend:
Aktivieren einer Benachrichtigung mit Annahme (110) unter Verwendung des Verifizierungsmanagementsystems (80), wenn vorherige Fracht, künftige Fracht und in den Transportcontainer (14) eingebrachte Fracht (34) kompatibel sind.

3. Verfahren nach Anspruch 2, ferner umfassend:
Übertragen der Benachrichtigung mit Annahme (110) an die Scannervorrichtung (40).

4. System (10) zum Überwachen der Kompatibilität zum Vermeiden von Kontamination einer Fracht (34) innerhalb eines Transportcontainers (14), wobei das System Folgendes umfasst:
eine Scannervorrichtung (40), die zum Lesen von Datenetiketten (38) konfiguriert ist, die einer in den Transportcontainer eingebrachten Fracht zugeordnet sind; und
eine Speichervorrichtung (50), die zum Speichern von Daten von den Datenetiketten konfiguriert ist; und **gekennzeichnet durch** ein Verifizierungsmanagementsystem (80), das zum Analysieren der Kompatibilität der Fracht als Reaktion auf die Daten konfiguriert ist, wobei das Verifizierungsmanagementsystem an die Speichervorrichtung gekoppelt ist, wobei das Verifizierungsmanagementsystem Folgendes beinhaltet:
ein Verifizierungskompatibilitätsmodul (84), das zum Bestimmen möglicher Kontaminationselementpaare als Reaktion auf die Daten konfiguriert ist, wobei das Verifizierungskompatibilitätsmodul als Reaktion auf die möglichen Kontaminationselementpaare zum Bestimmen konfiguriert ist, ob die in den Transportcontainer eingebrachte Fracht kompatibel ist; und
ein Verifizierungsrechnungsmodul (86), das als Reaktion auf mögliche Kontaminationselementpaare zum Bestimmen konfiguriert ist, ob mindestens eine von vorherige Fracht und künftiger Fracht mit in den Transportcontainer eingebrachter Fracht kompatibel ist, wobei das Verifizierungsrechnungsmodul von einer Endbenutzer-API (90) kompiliert ist, die Informationen umfassend Fleischrechnungen (92), Fischrechnungen (94) und Rechnungen für landwirtschaftliche Erzeugnisse(96) beinhaltet;
wobei das Verifizierungsmanagementsystem (80) zum Übertragen einer Benachrichtigung mit Warnung (105) an die Scannervorrichtung konfiguriert ist, wenn bestimmt ist, dass in den Transportcontainer (14) eingebrachte Fracht (34) nicht in dem Transportcontainer gelagert werden sollte, da sie nicht mit mindestens einer von vorherige Fracht und künftiger Fracht kompatibel ist.

5. System nach Anspruch 4, wobei:
das Verifizierungsmanagementsystem (80) zum Aktivieren einer Benachrichtigung mit Annahme (110) konfiguriert ist, wenn vorherige Fracht, künftige Fracht und in den Transportcontainer (14) eingebrachte Fracht (34) kompatibel sind.

6. System nach Anspruch 5, wobei:
das Verifizierungsmanagementsystem (80) zum Übertragen der Benachrichtigung mit Annahme (110) an die Scannervorrichtung (40) konfiguriert ist.

7. Computerprogrammprodukt, das physisch auf einem computerlesbaren Medium vorhanden ist, wobei das Computerprogrammprodukt Anweisungen beinhaltet, die beim Ausführen durch einen Prozessor den Prozessor zum Durchführen von Vorgängen veranlassen, umfassend:
Lesen von Datenetiketten (38), die einer in einen Transportcontainer (14) eingebrachten Fracht zugeordnet sind, unter Verwendung einer Scannervorrichtung (40); und
Speichern von Daten von den Datenetiketten unter Verwendung einer Speichervorrichtung (50); und **gekennzeichnet durch** Analysieren der Kompatibilität der Fracht unter Verwendung eines Verifizierungsmanagementsystems (80) als Reaktion auf die Daten, wobei das Verifizierungsmanagementsystem an die Speichervorrichtung gekoppelt ist, wobei das Verifizierungsmanagementsystem Folgendes beinhaltet:
ein Verifizierungskompatibilitätsmodul (84) zum Bestimmen möglicher Kontaminationselementpaare als Reaktion auf die Daten, wobei das Verifizierungskompatibilitätsmodul als Reaktion auf die möglichen Kontaminationselementpaare bestimmt, ob die in den Transportcontainer eingebrachte Fracht kompatibel ist; und
ein Verifizierungsrechnungsmodul (86) zum Bestimmen als Reaktion auf mögliche Kontaminationselementpaare, ob mindestens eine von vorherige Fracht und künftiger Fracht mit in den Transportcontainer eingebrachter Fracht kompatibel ist, wobei das Verifizierungsrechnungsmodul von einer Endbenutzer-API (90) kompiliert ist, die Informationen umfassend Fleischrechnungen (92), Fischrechnungen (94) und Rechnungen für landwirtschaftliche Erzeugnisse(96) beinhaltet;und
Übertragen einer Benachrichtigung mit Warnung (105) an die Scannervorrichtung unter Verwendung des Verifizierungsmanagementsystems (80), wenn bestimmt ist, dass in den Transportcontainer (14) eingebrachte Fracht (34) nicht in dem Transportcontainer gelagert werden sollte, da sie nicht mit mindestens einer von vorherige Fracht und künftiger Fracht kompatibel ist.

8. Computerprogrammprodukt nach Anspruch 7, wobei die Vorgänge ferner umfassen:
Aktivieren einer Benachrichtigung mit Annahme (110) unter Verwendung des Verifizierungsmanagementsystems (80), wenn vorherige Fracht, künftige Fracht und in den Transportcontainer (14) eingebrachte Fracht (34) kompatibel sind.

9. Computerprogrammprodukt nach Anspruch 8, wobei die Vorgänge ferner umfassen:
Übertragen der Benachrichtigung mit Annahme (110) an die Scannervorrichtung (40).

## Revendications

1. Procédé de surveillance de compatibilité pour éviter la contamination d'une cargaison (34) à l'intérieur d'un conteneur de transport (14), le procédé comprenant :
la lecture, à l'aide d'un dispositif de scanner (40), d'étiquettes de données (38) associées à une cargaison entrant dans le conteneur de transport ; et
le stockage, à l'aide d'un dispositif de stockage de mémoire (50), de données provenant des étiquettes de données ; et **caractérisé par**
l'analyse, à l'aide d'un système de gestion de vérification (80), de la compatibilité de la cargaison en réponse aux données, le système de gestion de vérification couplé au dispositif de stockage de mémoire, le système de gestion de vérification comportant :
un module de compatibilité de vérification (84) pour déterminer des paires d'éléments de contamination possibles en réponse aux données, dans lequel le module de compatibilité de vérification détermine si la cargaison entrant dans le conteneur de transport est compatible en réponse aux paires d'éléments de contamination possibles ; et
un module de facture de vérification (86) pour déterminer si au moins l'une d'une cargaison passée et d'une cargaison future est compatible avec la cargaison entrant dans le conteneur de transport en réponse aux paires d'éléments de contamination possibles, dans lequel le module de facture de vérification est compilé à partir d'une API d'utilisateur final (90) comportant des informations comprenant des factures de viande (92), des factures de poisson (94) et des factures de produits (96) ; et
transmettre une notification d'alerte (105) au dispositif de scanner, à l'aide du système de gestion de vérification (80), lorsqu'il est déterminé que la cargaison (34) entrant dans le conteneur de transport (14) ne doit pas être stockée à l'intérieur du conteneur de transport car elle n'est pas compatible avec au moins l'une d'une cargaison passée et d'une cargaison future.

2. Procédé selon la revendication 1, comprenant également :
l'activation d'une notification d'acceptation (110), à l'aide du système de gestion de vérification (80), lorsque la cargaison passée, la cargaison future et la cargaison (34) entrant dans le conteneur de transport (14) sont compatibles.

3. Procédé selon la revendication 2, comprenant également :
la transmission de la notification d'acceptation (110) au dispositif de scanner (40).

4. Système (10) de surveillance de compatibilité afin d'éviter la contamination d'une cargaison (34) à l'intérieur d'un conteneur de transport (14), le système comprenant :
un dispositif de scanner (40) configuré pour lire des étiquettes de données (38) associées à la cargaison entrant dans le conteneur de transport ; et
un dispositif de stockage de mémoire (50) configuré pour stocker des données à partir des étiquettes de données ; et **caractérisé par**
un système de gestion de vérification (80) configuré pour analyser la compatibilité de la cargaison en réponse aux données, le système de gestion de vérification couplé au dispositif de stockage de mémoire, le système de gestion de vérification comportant :
un module de compatibilité de vérification (84) configuré pour déterminer des paires d'éléments de contamination possibles en réponse aux données, dans lequel le module de compatibilité de vérification est configuré pour déterminer si une cargaison entrant dans le conteneur de transport est compatible en réponse aux paires d'éléments de contamination possibles ; et
un module de facture de vérification (86) configuré pour déterminer si au moins l'une d'une cargaison passée et d'une cargaison future est compatible avec la cargaison entrant dans le conteneur de transport en réponse aux paires d'éléments de contamination possibles, dans lequel le module de facture de vérification est compilé à partir d'une API d'utilisateur final (90) comportant des informations comprenant des factures de viande (92), des factures de poisson (94) et des factures de produits (96) ;
dans lequel le système de gestion de vérification (80) est configuré pour transmettre une notification d'alerte (105) au dispositif de scanner lorsqu'il est déterminé que la cargaison (34) entrant dans le conteneur de transport (14) ne doit pas être stockée à l'intérieur du conteneur de transport car elle n'est pas compatible avec au moins l'une d'une cargaison passée et d'une cargaison future.

5. Système selon la revendication 4, dans lequel :
le système de gestion de vérification (80) est configuré pour activer une notification d'acceptation (110) lorsque la cargaison passée, la cargaison future et la cargaison (34) entrant dans le conteneur de transport (14) sont compatibles.

6. Système selon la revendication 5, dans lequel :
le système de gestion de vérification (80) est configuré pour transmettre la notification d'acceptation (110) au dispositif de scanner (40).

7. Produit de programme informatique mis en œuvre de manière tangible sur un support lisible par ordinateur, le produit de programme informatique comportant des instructions qui, lorsqu'elles sont exécutées par un processeur, amènent le processeur à effectuer des opérations comprenant :
la lecture, à l'aide d'un dispositif de scanner (40), des étiquettes de données (38) associées à une cargaison entrant dans un conteneur de transport (14) ; et
le stockage, à l'aide d'un dispositif de stockage de mémoire (50), des données provenant des étiquettes de données ; et **caractérisé par**
l'analyse, à l'aide d'un système de gestion de vérification (80), de la compatibilité de la cargaison en réponse aux données, le système de gestion de vérification couplé au dispositif de stockage de mémoire, le système de gestion de vérification comportant :
un module de compatibilité de vérification (84) pour déterminer des paires d'éléments de contamination possibles en réponse aux données, dans lequel le module de compatibilité de vérification détermine si la cargaison entrant dans le conteneur de transport est compatible en réponse aux paires d'éléments de contamination possibles ; et
un module de facture de vérification (86) pour déterminer si au moins l'une d'une cargaison passée et d'une cargaison future est compatible avec la cargaison entrant dans le conteneur de transport en réponse aux paires d'éléments de contamination possibles, dans lequel le module de facture de vérification est compilé à partir d'une API d'utilisateur final (90) comportant des informations comprenant des factures de viande (92), des factures de poisson (94) et des factures de produits (96) ; et
transmettre une notification d'alerte (105) au dispositif de scanner, à l'aide du système de gestion de vérification (80), lorsqu'il est déterminé que la cargaison (34) entrant dans le conteneur de transport (14) ne doit pas être stockée à l'intérieur du conteneur de transport car elle n'est pas compatible avec au moins l'une d'une cargaison passée et d'une cargaison future.

8. Programme informatique selon la revendication 7, dans lequel les opérations comprennent également :
l'activation d'une notification d'acceptation (110), à l'aide du système de gestion de vérification (80), lorsque la cargaison passée, la cargaison future et la cargaison (34) entrant dans le conteneur de transport (14) sont compatibles.

9. Programme informatique selon la revendication 8, dans lequel les opérations comprennent également : la transmission de la notification d'acceptation (110) au dispositif de scanner (40) .
